Europäisches Patentamt

European Patent Office

Office européen des brevets

(19)

(11) Veröffentlichungsnummer : **0 163 777**
**B1**

# EUROPÄISCHE PATENTSCHRIFT

(12)

(45) Veröffentlichungstag der Patentschrift :
23.11.89

(21) Anmeldenummer : 84116452.8

(22) Anmeldetag : 28.12.84

(51) Int. Cl.⁴ : **E 04 H   7/30**, F 16 B   5/02

(54) **Aus Blechen zusammengeschraubter landwirtschaftlicher Behälter.**

(30) Priorität : 17.05.84 DE 8415004 U

(43) Veröffentlichungstag der Anmeldung :
11.12.85 Patentblatt 85/50

(45) Bekanntmachung des Hinweises auf die Patenterteilung : 23.11.89 Patentblatt 89/47

(84) Benannte Vertragsstaaten :
AT BE CH DE FR GB IT LI LU NL SE

(56) Entgegenhaltungen :
CA–A– 1 141 929
DE–A– 2 814 957
DE–A– 2 926 253
US–A– 2 159 346

(73) Patentinhaber : Henze, Hans Christian
Königstrasse 32
D-5100 Aachen (DE)

(72) Erfinder : Henze, Hans Christian
Königstrasse 32
D-5100 Aachen (DE)

(74) Vertreter : Henfling, Fritz, Dipl.-Ing.
Beurhausstrasse 7
D-4600 Dortmund 1 (DE)

## Beschreibung

Die Erfindung betrifft einen aus einzelnen, insbesondere glasierten, emaillierten oder kunststoffbeschichteten Blechen mittels einreihig sich an den Verbindungsstellen bzw. Stößen überlappenden Blechrändern angeordneten Schrauben zusammengebauten zylindrischen Silobehälter zur Lagerung von landwirtschaftlichen Stoffen, wie Gülle oder Silage, welcher im Überlappungsbereich der achsparallelen vertikalen Blechstöße im Bereich der Schraubenreihen angeordnete Profilleisten aufweist (vgl. z. B. DE-A-2 814 957).

Mit steigenden Preisen für Handelsdünger wird es immer interessanter, statt dessen die in der Großviehhaltung anfallende Gülle einzusetzen. Die Gülle kann aber nur dann optimal genutzt werden, wenn sie pflanzen- und vegetationsgerecht eingesetzt wird. Das erfordert je nach Art der Flächennutzung sechs bis zwölf Monate Lagerzeit. Für die Lagerung derartiger flüssiger Medien werden in der Landwirtschaft bevorzugt oberirdische Behälter eingesetzt, die eine zylindrische Form aufweisen. Behälter dieser Art werden auch zur Lagerung von Silage und anderen fließfähigen Stoffen eingesetzt.

Es hat eine Behälterbauart Verbreitung gefunden, bei der einzelne Stahlbleche im Überlappungsbereich durch eine Reihe von Schrauben verbunden werden, so daß die Behältermontage durch den Landwirt selbst möglich wird. Zum Zwecke des Korrosionsschutzes sind die Stahlbleche mit einer dünnen, elastischen und dauerhaften Schicht aus blauem Kobaltglas versehen. Die Bleche werden unter Verwendung dauerelastischer, korrosionsbeständiger Spezialdichtmasse zu Ringen zusammengefügt, die je nach gewünschter Lagerkapazität unterschiedliche Durchmesser aufweisen. Zur weiteren Anpassung des Behältervolumens können mehrere solcher Ringe übereinander angeordnet werden. Den statischen Erfordernissen entsprechend verwendet man mehrere standardisierte Blechdicken.

Aus der Literatur ist zwar bekannt, bei durch eine Reihe von Schrauben verbundenen überlappenden Vertikalstößen von einen Behältermantel bildenden Blechringen den Stoßbereich beidseitig abdeckende Profilleisten vorzusehen, von denen eine die Köpfe der Verbindungsschrauben hinterfängt und die gegenüberliegende mit Gewindebohrungen versehene Profilleiste die Funktion der Muttern für die Verbindungsschrauben übernimmt (DE-A-28 14 957), hierbei sind statische Probleme jedoch nicht angesprochen. Eine weitere Literaturstelle, nämlich die US-A-2 159 346, offenbart eine Stoßverbindung von eine Behälterwandung bildenden Blechen, bei der eine gegen die Behälterwandung von innen zur Anlage kommende, den Kopf der von innen angesetzten Verbindungsschrauben aufnehmende U-Profilleiste als Sicherung gegen das Drehen der Schrauben beim Anziehen der von außen an der Schraube angesetzten Muttern vorgesehen ist. Auch hierbei sind Probleme der Statik nicht angesprochen.

Der Erfindung liegt die Aufgabe zugrunde, einen Silobehälter zu schaffen, der variabel durch die Anordnung seiner Konstruktionselemente im Baukastensystem die unterschiedlichsten statischen Erfordernisse erfüllen kann, so daß zur Abdeckung aller Anwendungsfälle ein geringes Durchmessersortiment sowie wenige Blechstärken zu bevorraten sind. Weiterhin soll die Möglichkeit eines nachträglichen Aufstockens zur Vergrößerung des Lagervolumens oder eine Änderung des Lagergutes mit minimalem Anpaßaufwand möglich sein, wobei die Dichtheit der Schraubverbindung über Jahre hinaus bestehen bleiben soll.

Die Aufgabe wird erfindungsgemäß in der Weise gelöst, daß

die beidseitig vorgesehenen Profilleisten als Stützelemente mit einer Dicke größer als 1,5 mm ausgebildet werden, die ein Schrägstellen der Schrauben unter Belastung verhindern,

die Profilleisten Löcher für die Schrauben aufweisen, die das 3 bis 4,8-fache des Schraubendurchmessers als Abstand von Mitte zu Mitte insbesondere einen Abstand zwischen 40 und 60 mm, bevorzugt zwischen 42 und 53,7 mm, aufweisen

und die Lochränder der Profilleisten in einer 0,3 bis 1-fachen Entfernung des Lochabstandes zu den Kanten der Blechränder angeordnet sind, insbesondere zwischen 20 und 40 mm bevorzugt 31 mm, Entfernung aufweisen.

Die die Schraubenköpfe und die Muttern hinterfangenden, einem Schrägstellen der Schrauben unter Belastung entgegenwirkenden Stützelemente, die in der angegebenen Weise unter Beachtung der Vorgabe für die Plazierung der in den Stützelementen vorzusehenden, die Durchgänge für die die überlappenden Ränder der Mantelbleche zusammenfassenden Schrauben bildenden Löcher ausgelegt sind, erhöhen die Belastbarkeit der Stoßverbindung in vorteilhafter Weise um ca. 30 %. Silobehälter mit der erfindungsgemäß ausgestalteten Schraubverbindung für die Zusammenfassung der überlappenden Ränder der den Behältermantel bildenden Bleche weisen somit gegenüber vorbekannten Behältern dieser Bauart eine statische Reserve von 30 % auf. Aus der höheren Beanspruchbarkeit der Stoßverbindung des Behälters resultiert zum einen die Möglichkeit auch Lagergut höherer Dichte bei im übrigen unveränderten Behältervorgaben einzulagern und zum andern dann auch die Möglichkeit, den Behälter im Bedarfsfall aufzustocken, ohne Gefahr zu laufen, die Stabilität des Behälters zu beeinträchtigen. Alternativ eröffnet die Erfindung die Möglichkeit der Verwendung von Mantelblechen geringerer Dicke, die infolge ihrer höheren Flexibilität auch einen größeren Behälterdurchmesser zulassen, woraus in vorteilhafter Weise die Möglichkeit einer Reduzierung des bereitzuhaltenden Sortiments an Blechen für die Erstellung solcher Behälter unterschiedlichen Durchmessers resultiert.

In Ausgestaltung der Erfindung bestehen mit dem Ziel der Erhöhung der Beanspruchbarkeit des Vertikalstoßes die Stützelemente für die Schrauben aus Material höherer Festigkeit als das Grundmaterial des Mantelblechs, insbesondere bei einer Blechqualität mit einer Zugfestigkeit zwischen 300 und 350 sowie einer Streckgrenze zwischen 210 und 270 N/mm² aus Edelstahl. Die Möglichkeit, unterschiedliche Qualitäten für die Behälterbleche einerseits und die Stützelemente andererseits vorzusehen, gestattet es, aus preisgünstigem Massenstahl gefertigte Behälterbleche einzusetzen, während die Stützelemente für die Verbindungsschrauben ihrer funktionalen Bestimmung gemäß aus Material höherer Festigkeit, insbesondere aus Edelstahl, gefertigt werden, der den Stützen die funktionsgerechten Festigkeitseigenschaften vermittelt und, was die innen liegende Stütze betrifft, sich dann auch als hinreichend korrosionsbeständig, etwa bei einer Befüllung des Behälters mit Gülle, erweist.

In weiterer Ausgestaltung ist die Dicke der Stützelemente zur Verhinderung eines Beulens der Mantelbleche in der Schraubenschnittebene ausgelegt, um eine Beeinträchtigung der Dichtigkeit des Behältermantels im Stoßbereich und einen daraus resultierenden Austritt von Flüssigkeit aus dem Behälter zu vermeiden.

In weiterer Ausgestaltung ist vorgesehen, daß die Stützelemente eine Breite aufweisen, die das 1,5 bis 4-fache des Schraubendurchmessers beträgt, insbesondere das 2,36-fache bei einem bevorzugten Schraubendurchmesser von 12,7 mm, nachdem sich bei dem Einsatz von Schrauben eines Durchmessers von 12,7 mm Stützelemente einer Breite von 20 bis 50 mm als allen Ansprüchen, wie geringem Materialbedarf, gutem Schutz der auf das Mantelblech aufgebrachten Korrosionsschicht vor Abplatzen sowie ausreichender Stützwirkung Rechnung tragend erwiesen haben. Das wirtschaftliche Optimum der Stützenbreite liegt unter Berücksichtigung der zu gewärtigenden Verformungen im Bereich der Blechstöße und dem Einfluß der Verformungen auf die Dichtigkeit der Stoßverbindung bei 30 mm.

In weiterer Ausgestaltung ist vorgesehen, daß das Material der Stützelemente beidseits des Stoßes unterschiedlich und bevorzugt das innen liegende Stützelement aus Edelstahl höherer Korrosionsbeständigkeit besteht. Damit kann aggressiverem Lagergut unter Verwendung preisgünstigen Materials für das der Einwirkung des Lagerguts nicht ausgesetzte, an der Außenwandung des Behälters angeordnete Stützelement Rechnung getragen werden.

In weiterer Ausgestaltung sind die Durchgänge für die Schraubenbolzen bildenden Löcher der Stützelemente 2 bis 10 % größer als der Schraubendurchmesser, insbesondere bei Schrauben von 12,7 mm Durchmesser mit einem Durchmesser größer als 13 mm, bevorzugt mit 14,3 mm ausgebildet. Das sich daraus ergebende Spiel zwischen Schraube und Stützelement erlaubt eine bequeme Montage, ohne daß die Lochleibung bei der späteren Belastung das zulässige Maß die Schraubverbindung beeinträchtigend überschreitet.

In weiterer Ausgestaltung ist vorgesehen, daß die Schrauben im Bereich des Schraubensitzes eine Vorspannung von 0,5 bis 1 N/mm² aufweisen. Eine solche Vorspannung stellt die gewünschte anhaltende Dichtigkeit des Behältermantels im Überlappungsbereich der Mantelbleche sicher.

In weiterer Ausgestaltung weisen die Schrauben einen Durchmesser auf, der das 3,5 bis 7,5-fache der Blechdicke beträgt, bevorzugt 12,7 mm bei Blechdicken zwischen 1,8 bis 4,2 mm. Man kommt danach in vorteilhafter Weise für den gesamten Blechdickenbereich mit einer Schraubenabmessung aus.

In weiterer Ausgestaltung werden die Stützelemente von Lochleisten gebildet, deren Löcher durch das gleiche Werkzeug erzeugt werden, wie die des Bleches. Das bietet fertigungstechnische Vorteile. Damit wird dann auch Montageproblemen aufgrund mangelhafter Maßhaltigkeit vorgebeugt, wie sie sich bei der Lochung der Bleche einerseits und der Stützelemente andererseits mit verschiedenen Werkzeugen ergeben können.

In weiterer Ausgestaltung ist vorgesehen, daß die Stützelemente bevorzugt nur am unteren Bereich der vertikalen Verbindungsstellen angeordnet sind, da es bei optimaler Ausnutzung der statischen Festigkeit des Behälters vielfach ausreicht, wenn die Stützelemente kostensparend auf den unteren Bereich der vertikalen Blechstöße beschränkt bleiben.

In weiterer Ausgestaltung ist der Überlappungsbereich der Verbindungsstelle mit einer Zwischenlage eines plastischen Dichtungselementes versehen wird. Aus dieser Ausgestaltung resultieren in vorteilhafter Weise auch bei sehr hoher Belastung der Stoßverbindung derart geringe Deformierungen, daß die Dichtigkeit des Stoßes anhaltend unbeeinträchtigt bleibt. Mit Hilfe einer solchen Dichtung läßt sich der Stoßbereich des Behälters dann auch in einfachster Weise einwandfrei abdichten.

In der Zeichnung ist die Erfindung an Hand eines in schematischer Weise dargestellten Ausführungsbeispieles weitergehend erläutert. Es zeigen:

Figur 1 den Ausschnitt einer erfindungsgemäßen Stoßverbindung in Draufsicht,

Figur 2 einen Schnitt nach Linie II-II in Figur 1,

Figur 3 die abgebrochene Abwicklung eines aus vier Ringen bestehenden Behältermantels mit Angaben über die unterschiedliche Beanspruchung der einzelnen Ringe.

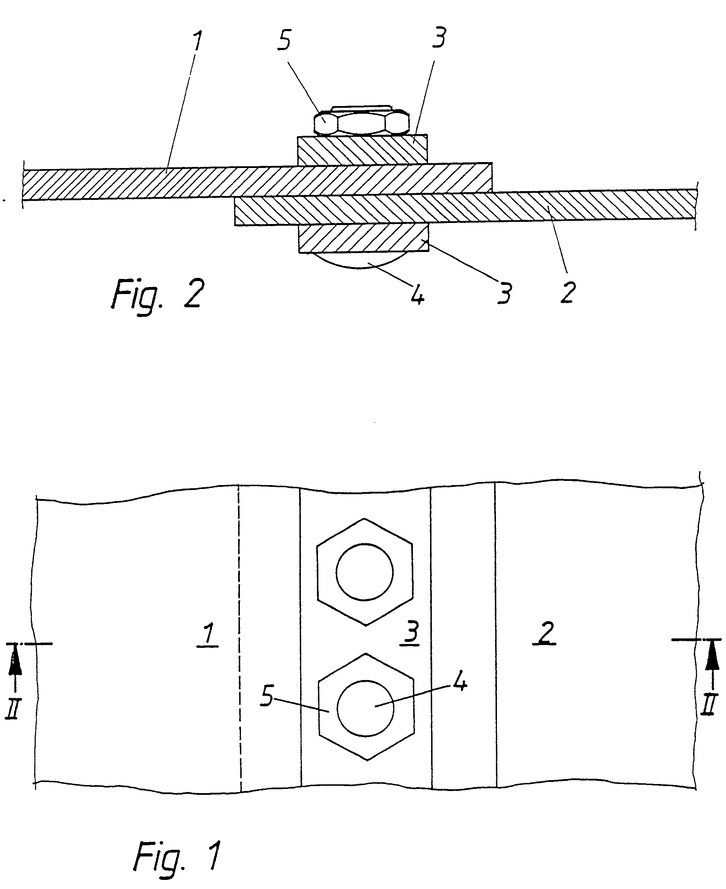

In den Fig. 1 und 2 bezeichnen 1 und 2 die Endbereiche eines den Behältermantel bildenden Blechringes, die überlappend zusammenstoßen und mittels einer Reihe von Schrauben 4 und den Schrauben 4 zugeordneten Muttern 5 zusammengefaßt sind. Das Blech ist aus Gründen des Korrosionsschutzes mit Kobaltglas emailliert. In der Fuge zwischen beiden Blechen ist eine Mastixdichtung aufgebracht. Um zu verhindern, daß sich die Schrauben 4 schrägstellen, sind im Überlappungsbereich einerseits den Kopf der Schraube 4 und andererseits die der Schraube 4 zuzuordnende Mutter 5 hinterfangende Stützelemente ingestalt von gelochten Blechstreifen 3 vorgesehen, wie das insbesondere auch aus Fig. 2 hervorgeht. Die Stützen 3 verhindern weitergehend dann auch eine Beschädigung des Korrosionsschutzes bei der Herstellung der Stoßverbindung.

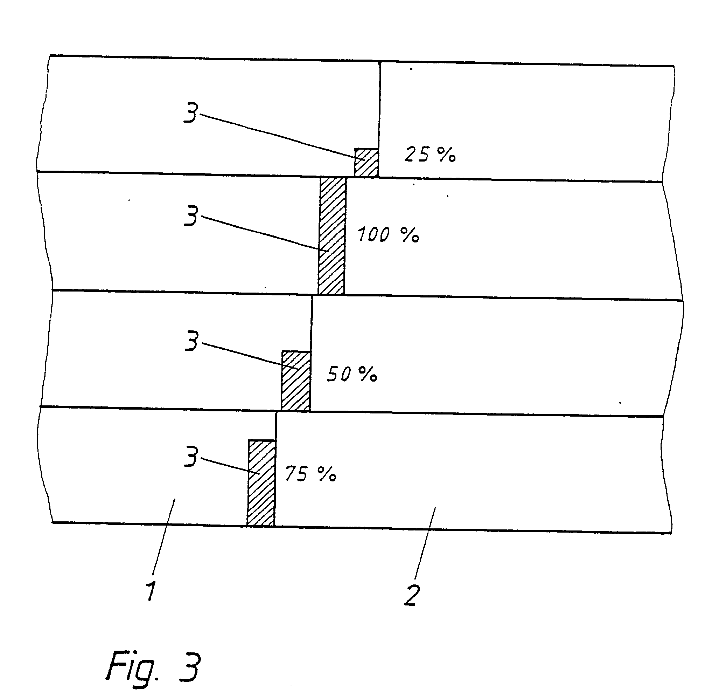

Fig. 3 verdeutlicht die unterschiedlichen Beanspruchungen des Behältermantels in den von den aufeinander folgenden, den Behältermantel bildenden Ringen gebildeten Zonen. Jede Zone wird, wie das aus den Fig. 1 und 2 entnehmbar ist, von einem Blechring mit überlappenden Enden 1 und 2 gebildet, dem im Überlappungsbereich das Stützelement für die Verbindungsschrauben bildende Blechstreifen 3 zugeordnet sind. Da der Behälterinnendruck von unten nach oben hin abnimmt, können die verwendeten Bleche den abnehmenden Beanspruchungen durch abnehmende Dicke angepaßt werden. Unter anderem aus Lagerhaltungsgründen können jedoch nur in begrenztem Umfang Bleche unterschiedlicher Dicke zum Einsatz kommen. Das führt zu einer unterschiedlichen Ausnutzung der durch die Blechdicke in Verbindung mit der erfindungsgemäßen Schraubverbindung resultierenden Beanspruchbarkeit. Der unterschiedlichen Beanspruchung kann durch Begrenzung der von den Stützelementen 3 abzudeckenden Bereiche in den einzelnen Zonen Rechnung getragen werden. Im dargestellten Fall wird die dritte Zone von unten durch den an ihr zu gewärtigenden Innendruck, was die Blechstärke betrifft, voll beansprucht. Dementsprechend ist eine vollständige Überdeckung des Stoßbereichs durch das Stützelement 3 vorgesehen. Im Falle der noch dargestellten beiden unteren Zonen sowie der obersten Zone wird die Belastbarkeit dieser Zonen im Hinblick auf ihre jeweilige Blechdicke entsprechend den in Fig. 3 eingetragenen Prozentangaben nicht voll ausgenutzt. Dementsprechend bedarf es dann auch nur der Abdeckung eines Teils des jeweiligen Stoßbereichs durch die Stützelemente 3.

## Patentansprüche

1. Aus einzelnen, insbesondere glasierten, emaillierten oder kunststoffbeschichteten Blechen (1, 2) mittels einreihig sich an den Verbindungsstellen bzw. Stößen überlappenden Blechrändern angeordneten Schrauben (4) zusammengebauter zylindrischer Silobehälter zur Lagerung von landwirtschaftlichen Stoffen, wie Gülle oder Silage, welcher im Überlappungsbereich der achsparallelen vertikalen Blechstöße im Bereich der Schraubenreihen beidseitig angeordnete Profilleisten (3) aufweist, dadurch gekennzeichnet, daß

die beidseitig vorgesehenen Profilleisten (3) als Stützelemente (3) mit einer Dicke größer als 1,5 mm ausgebildet sind die ein Schrägstellen der Schrauben unter Belastung verhindern,

die Profilleisten (3) Löcher für die Schrauben aufweisen, die das 3 bis 4,8-fache des Schraubendurchmessers als Abstand von Mitte zu Mitte, insbesondere einen Abstand zwischen 40 und 60 mm, bevorzugt zwischen 42 und 53,7 mm, aufweisen und

die Lochränder der Profilleisten (3) in einer 0,3 bis 1-fachen Entfernung des Lochabstandes zu den Kanten der Blechränder angeordnet sind, insbesondere zwischen 20 und 40 mm, bevorzugt 31 mm, Entfernung aufweisen.

2. Behälter nach Anspruch 1, dadurch gekennzeichnet, daß zur Erhöhung der Beanspruchbarkeit des Vertikalstoßes die Stützelemente (3) für die Schrauben aus Material höherer Festigkeit als das Grundmaterial des Bleches (1, 2) bestehen, insbesondere bei einer Blechqualität mit einer Zugfestigkeit zwischen 300 und 350 sowie einer Streckgrenze zwischen 210 und 270 N/mm² aus Edelstahl bestehen.

3. Behälter nach Anspruch 1 oder Anspruch 2, dadurch gekennzeichnet, daß die Dicke der Stützelemente (3) zur Verhinderung eines Beulens der Bleche in der Schraubenschnittebene ausgelegt ist.

4. Behälter nach einem der Ansprüche 1 bis 3, dadurch gekennzeichnet, daß die Stützelemente (3) eine Breite aufweisen, die das 1,5 bis 4-fache eines Schraubendurchmessers beträgt, insbesondere das 2,36-fache bei einem bevorzugten Schraubendurchmesser von 12,7 mm aufweist.

5. Behälter nach einem der Ansprüche 1 bis 4, dadurch gekennzeichnet, daß das Material der Stützelemente (3) beiderseits des Stoßes unterschiedlich und bevorzugt das innenliegende Stützelement aus Edelstahl höherer Korrosionsbeständigkeit besteht.

6. Behälter nach einem der Ansprüche 1 bis 5, dadurch gekennzeichnet, daß die Löcher der Stützelemente (3) 2 bis 10 % größer als der Schraubendurchmesser sind, insbesondere bei Schrauben von 12,7 mm Durchmesser mit einem Durchmesser größer als 13 mm, bevorzugt 14,3 mm ausgebildet sind.

7. Behälter nach einem der Ansprüche 1 bis 6, dadurch gekennzeichnet, daß die Vorspannung der Schrauben im Bereich des Schraubensitzes 0,5 bis 1 N/mm² beträgt.

8. Behälter nach einem der Ansprüche 1 bis 7, dadurch gekennzeichnet, daß die Schrauben einen Durchmesser aufweisen, der das 3,5 bis 7,5-fache der Blechdicke beträgt, bevorzugt 12,7 mm bei Blechdicken zwischen 1,8 und 4,2 mm.

9. Behälter nach einem der Ansprüche 1 bis 8, dadurch gekennzeichnet daß die Stützelemente (3) die Form von Lochleisten aufweisen, deren Löcher durch das gleiche Werkzeug erzeugt wurden wie die des Bleches.

10. Behälter nach einem der Ansprüche 1 bis 9, dadurch gekennzeichnet, daß die Stützelemente (3) bevorzugt nur im unteren Bereich der vertikalen Verbindungsstelle (1, 2) angeordnet sind.

11. Behälter nach einem der Ansprüche 1 bis 10, dadurch gekennzeichnet, daß der Überlappungsbereich der Verbindungsstelle mit einer Zwischenlage eines plastischen Dichtungselementes versehen ist.

## Claims

1. Cylindrical silo for storing such agricultural substances as manure or silage, consisting of individual plates (1, 2) and especially glazed, enamelled or plastic-coated plates assembled by means of a single row of bolts (4) arranged at the connecting or joining points to overlapping plates' edges and having, in the region of the overlap of the axis-parallel vertical plate joints, profile strips (3) arranged on both sides near the rows of bolts, characterised in that

the profile strips (3) provided on both sides are constituted as supporting members (3) more than 1.5 mm thick which prevent the bolts pitching under load, that

the profile strips (3) have bolt-holes the distance between centres of which is 3 to 4.8 times the diameter of the bolt, which is particularly a distance between 40 and 60 mm and preferably between 42 and 53.7 mm, that

the edges of the holes in the profile strips are arranged at a distance which is 0.3 to 1 times the distance between the holes and the edges of the plate borders, especially between 20 and 40 mm and preferably 31 mm.

2. Tank according to claim 1, characterised in that, to enhance the ability of the vertical join to withstand stresses, the supporting members (3) for the bolts are made of a material which is stronger than that of the base metal of the plate (1, 2), especially with a quality of plate with a tensile strength of 300-350 N/mm$^2$ and an elastic limit of 210-270 N/mm$^2$ of stainless steel.

3. Tank according to claims 1 or 2, characterised in that the thickness of the supporting members (3) is such that buckling of the plates on the cutting plane of the bolts is prevented.

4. Tank according to one of the claims 1 to 3, characterised in that the supporting members are of a width which is 1.4 to 4 times the diameter of a bolt, and in particular 2.36 times with a preferred bolt diameter of 12.7 mm.

5. Tank according to claims 1 to 4, characterised in that either of the supporting members (3) either side of the joint, and preferably inside the supporting member, consists of stainless steel with a higher resistance to corrosion.

6. Tank according to one of the claims 1 to 5, characterised in that the holes in the supporting members (3) are 2-10 % larger than the bolt diameter, having, particularly in the case of 12.7 mm diameter bolts, a diameter larger than 13 mm, preferably 14.3 mm.

7. Tank according to one of the claims 1 to 6, characterised in that the tension of the bolts around the bolt seating is between 0.5 to 1 N/mm$^2$.

8. Tank according to one of the claims 1 to 7, characterised in that the bolts have a diameter which is 3.5 to 7.5 times the plate thickness, preferably 12.7 mm in the case of plate thicknesses between 1.8 and 4.2 mm.

9. Tank according to one of the claims 1 to 8, characterised in that the supporting members (3) have the shape of perforated strips the holes of which were produced using the same tool as that used for those in the plate.

10. Tank according to one of the claims 1 to 9, characterized in that the supporting members (3) are preferably arranged in only the lower region of the vertical connecting point (1, 2).

11. Tank according to one of the claims 1 to 10, characterised in that the area of overlap at the connecting point is provided with an intermediate layer of a plastic sealing member.

## Revendications

1. Réservoir pour silo cylindrique assemblé à partir de tôles (1, 2) individuelles en particulier vernies, émaillées, ou revêtues de matière plastique, à l'aide de vis (4) disposées sur une rangée, aux points de liaison ou sur les bords des tôles recouvrant les joints, en vue de stocker des substances agricoles, telles que du lisier ou du fourrage préparé au silo, réservoir présentant, dans la zone de recouvrement des joints verticaux et à axes parallèles des tôles, des bandes profilées (3) disposées dans la zone des rangées de vis, des deux côtés, caractérisé en ce que :

les bandes profilées (3) prévues des deux côtés sont réalisées avec une épaisseur supérieure à 1,5 mm et empêchent un positionnement en biais des vis sous charge,

les bandes profilées (3) présentent des trous, destinés aux vis, présentant un entraxe faisant 3 à 4,8 fois le diamètre des vis, en particulier un entraxe compris entre 40 et 60 mm, de préférence entre 42 et 53,7 mm, et

les bords des trous des bandes profilées (3) sont disposés, par rapport aux arêtes des bords de tôle, à un éloignement faisant 0,3 à 1 fois l'entraxe, en particulier un éloignement compris entre 20 et 40 mm, de préférence 31 mm.

2. Réservoir selon la revendication 1, caractérisé en ce qu'en vue d'augmenter la résistance du joint vertical, les éléments de soutien (3) des vis se composent d'un matériau d'une résistance supérieure à celle du matériau de base de la tôle (1, 2), se composant en particulier d'acier spécial, pour une qualité de tôle présentant une résistance à la traction comprise entre 300 et 350 et une limite d'élasticité comprise entre 210 et 270 N/mm$^2$.

3. Réservoir selon la revendication 1 ou 2, caractérisé en ce que l'épaisseur des éléments de soutien (3) est déterminée en vue d'empêcher les tôles de former des hernies dans le plan de coupe des vis.

4. Réservoir selon l'une des revendications 1 à 3, caractérisé en ce que les éléments de soutien (3) présentent une largeur comprise entre 1,5 à 4 fois le diamètre d'une vis, en particulier 2,36 fois dans le cas d'un diamètre de vis préféré de 12,7 mm.

5. Réservoir selon l'une des revendications 1 à 4, caractérisé en ce que le matériau des éléments de soutien (3) est différent des deux côtés du joint et que, de préférence, l'élément de soutien intérieur se compose d'un acier spécial offrant une résistance à la corrosion plus élevée.

6. Réservoir selon l'une des revendications 1 à 5, caractérisé en ce que les trous des éléments de soutien (3) sont 2 à 10 % plus grands que le diamètre des vis, en particulier dans le cas de vis d'un diamètre de 12,7 mm, ils sont plus grands que 13 mm, faisant de préférence 14,3 mm.

7. Réservoir selon l'une des revendications 1 à 6, caractérisé en ce que la précontrainte des vis dans la zone de siège des vis est de 0,5 à 1 N/mm².

8. Réservoir selon l'une des revendications 1 à 7, caractérisé en ce que les vis présentent un diamètre faisant 3,5 à 7,5 fois l'épaisseur de la tôle, de préférence 12,7 mm dans le cas d'épaisseurs de tôle comprises entre 1,5 et 4,2 mm.

9. Réservoir selon l'une des revendications 1 à 8, caractérisé en ce que les éléments de soutien (3) ont la forme de bandes à trous, dont les trous sont produits par le même outil que pour ceux de la tôle.

10. Réservoir selon l'une des revendications 1 à 9, caractérisé en ce que, de préférence, les éléments de soutien ne sont disposés que dans la zone inférieure de l'emplacement de liaison vertical (1, 2).

11. Réservoir selon l'une des revendications 1 à 10, caractérisé en ce que la zone de recouvrement du point de l'emplacement de liaison est pourvu d'une couche intermédiaire d'un élément d'étanchéité plastique.

Fig. 2

Fig. 1

Fig. 3